# DEMANDE DE BREVET EUROPEEN

(11) **EP 1 449 730 A1**
(43) Date de publication de la demande: **25.08.2004**
(21) Numéro de dépôt: 04290310.4
(22) Date de dépôt: 06.02.2004
(51) Int. Cl.: B60T 7/10, B60T 17/22

(54) **Dispositif de commande manuelle de frein de parking**

(30) Priorité: 21.02.2003 FR 0302148
(71) Demandeur: RENAULT AGRICULTURE, 78141 Velizy-Villacoublay (FR)
(72) Inventeur: Charmant, Jérôme, 92360 Meudon la Foret (FR)
(74) Mandataire: Rougemont, Bernard

(57) **Abrégé**

Dispositif de commande de frein de parking de véhicule comportant un levier (3) articulé sur un support (1) rapporté sur une partie fixe du véhicule, caractérisé en ce qu'il présente deux biellettes (7, 8) articulées sur le support (1) et sur le levier (3) de manière à définir avec ces éléments un parallélogramme déformable (1, 3, 7, 8) permettant au levier (3) de débattre autour du support (1) en restant sensiblement parallèle à lui-même.

## Description

La présente invention concerne une commande manuelle de frein de parking pour véhicule routier ou agricole, montée sur le plancher du véhicule, à proximité du siège conducteur.

Plus précisément, elle a pour objet un dispositif de commande de frein de parking de véhicule comportant un levier articulé sur un support rapporté sur un partie fixe du véhicule

Un tel dispositif est utilisable pour le freinage de secours et de parking de tout véhicule roulant et motorisé. Cependant, l'invention trouve une application privilégiée, mais non limitative sur une commande de frein de parking de tracteur agricole, dont le poste de pilotage présente comme particularité une hauteur importante de l'assise du siège conducteur par rapport au plancher.

On connaît de nombreux types de commande de frein de parking de véhicule routier ou agricole. Dans la plupart d'entre eux, la poignée saisie par l'utilisateur constitue l'extrémité d'un levier pivotant sur un socle fixe monté sur le plancher du véhicule, et le levier porte un cliquet d'arrêt coopérant avec un secteur cranté de la base pour immobiliser le levier dès qu'il est relâché par l'utilisateur.

Par la publication US 6016 718, on connaît un dispositif de commande manuelle de frein de parking du type indiqué ci-dessus, dont le levier pivote vers le haut partir d'une position de repos sensiblement parallèle au plancher du véhicule. Le levier s'étend dans prolongement de la base supérieure d'un support trapézoïdal pivotant au niveau de sa base inférieure sur un socle. Le support de levier de forme élargie montré par cette publication, permet de décaler vers le haut le levier par rapport à son axe de rotation sur le socle. Une telle disposition permet de surélever le levier et la poignée par rapport au socle, donc de rapprocher celle-ci du niveau de l'assise du siège conducteur. Cependant, elle n'a aucune incidence directe sur la course du levier utile au freinage, qui est simplement fonction de la distance entre la poignée et l'axe de rotation du levier, donc de la longueur et de l'encombrement de célui-ci.

La présente invention a pour but d'améliorer la course du levier utile au freinage tout en réduisant l'encombrement du dispositif.

Dans ce but, le dispositif de commande proposé par l'invention présente deux biellettes articulées sur le levier et sur son support de manière à définir avec ces éléments un parallélogramme déformable permettant au levier de débattre autour de l'embase en restant sensiblement parallèle à lui-même.

De préférence, le dispositif présente une tringle de renvoi d'effort sur le châssis du tracteur articulée sur une biellette du parallélogramme.

Selon un mode de réalisation particulier, il peut présenter un cliquet d'arrêt du levier coopérant avec un secteur cranté d'une biellette.

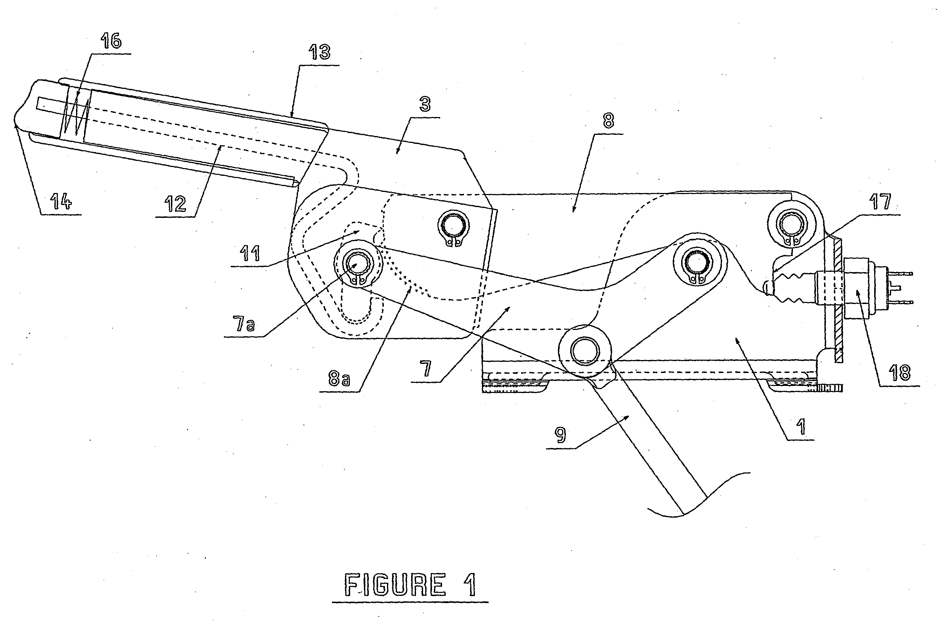

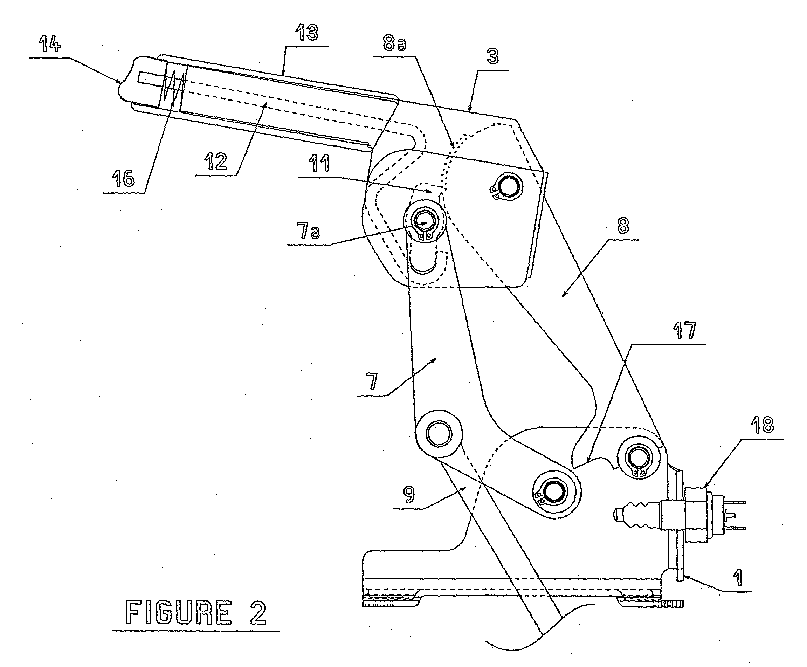

D'autres caractéristiques et avantages de l'invention apparaîtront clairement à la lecture de la description suivante d'un mode de réalisation non limitatif du dispositif proposé en liaison avec les dessins annexés sur lesquels les figures 1 et 2 représentent ce dispositif respectivement en position de repos et en position de serrage du frein.

Le dispositif illustré par les figures présente un support 1 rapporté sur une partie fixe du véhicule. Le levier de commande 3 du dispositif porte une poignée 13 et un bouton d'extrémité 14.

Conformément à l'invention, le levier 3 est articulé sur le support 1 par l'intermédiaire de deux biellettes 7, 8 articulées sur le support 1 et sur le levier 3, de manière à définir avec ces éléments un parallélogramme déformable 1, 3, 8, 7 permettant au levier 3 de débattre autour du support 1 tout en restant sensiblement parallèle à lui-même.

Comme indiqué sur les schémas, le dispositif proposé comporte une tringle de renvoi d'effort 9 qui est articulée sur la biellette 7. La tringle 9 permet de renvoyer sur le châssis, avec un coefficient multiplicateur, les efforts appliqués par le conducteur sur le levier 3.

L'immobilisation du levier 3 sur le support 1 est assurée par un cliquet d'arrêt 11, qui coopère à cet effet avec un secteur cranté 8a de la biellette 8. Selon le mode de réalisation particulier illustré par les figures, le secteur cranté 8a est porté par l'extrémité supérieure de la biellette 8 qui ne porte pas la tringle de renvoi 9. Le déplacement du cliquet 11 est contrôlé par une tige de manipulation 12 s'étendant au travers du levier 3. Conformément à l'invention, . le cliquet peut avantageusement basculer autour du même axe 7a que la biellette 7.

La prise en main du levier par le conducteur est assurée par une poignée 13 portée par celui-ci. Le levier 3 porte également un bouton d'extrémité 14 dont l'enfoncement permet de dégager le cliquet 11 à l'écart du secteur cranté 8a par l'intermédiaire de la tige 12 à l'encontre d'un ressort de rappel 16.

Enfin, la commande est munie de moyens de contrôle électriques de position du levier 3. Ces moyens peuvent par exemple comprendre un épaulement 17, prévu à l'extrémité inférieure de la biellette 8. Lorsque le frein est desserré (figure 1), l'épaulement 17 est en appui contre un interrupteur 18. Dans cette situation, des contacts électriques (non représentés) sont ouverts à l'intérieur de l'interrupteur 18, et celui-ci ne transmet pas de signal électrique. Lorsque le frein est serré (figure 2), les mêmes contacts sont fermés, et l'interrupteur transmet un signal.

En comparant les figures 1 et 2, on voit que le parallélogramme déformable constitué par le support, le levier et les deux biellettes permet, au levier de débattre autour du support en restant sensiblement parallèle à lui-même. Comme indiqué plus haut, cette disposition est très avantageuse pour diminuer l'encombrement de la commande de frein de parking sur le poste de conduite du véhicule et rapprocher la poignée du conducteur sans accroître exagérément les dimensions du support ou la longueur du levier. Enfin, il faut souligner son intérêt particulier sur le plan ergonomique car le serrage du frein de parking est obtenu par un mouvement naturel du bras du conducteur, du bas vers le haut.

## Revendications

1. Dispositif de commande de frein de parking de véhicule comportant un levier (3) articulé sur un support (1) rapporté sur une partie fixe du véhicule, **caractérisé en ce qu'**il présente deux biellettes (7, 8) articulées sur le support (1) et sur le levier (3) de manière à définir avec ces éléments un parallélogramme déformable (1, 3, 7, 8) permettant au levier (3) de débattre autour du support (1) en restant sensiblement parallèle à lui-même.

2. Dispositif de commande selon la revendication 1, **caractérisé en ce qu'**il présente une tringle (9) de renvoi d'effort sur le châssis du tracteur articulée sur une biellette (7) du parallélogramme (1, 3, 7, 8).

3. Dispositif de commande selon la revendication 1 ou 2, **caractérisé en ce qu'**il présente un cliquet (11) d'arrêt du levier coopérant avec un secteur cranté (8a) d'une biellette (8).

4. Dispositif de commande selon la revendication 3, **caractérisé en ce que** le secteur cranté (8a) est porté par l'extrémité supérieure de la biellette (8).

5. Dispositif de commande selon la revendication 3 ou 4, **caractérisé en ce que** le cliquet (11) bascule autour de l'axe d'articulation (7a) de l'autre biellette (7).

6. Dispositif de commande selon la revendication 3 4 ou 5, caractérisé en ce le cliquet (11) est commandé par une tige de manipulation (12) s'étendant au travers du levier (3).

7. Dispositif de commande selon l'une des revendications 3 à 6, **caractérisé en ce que** le levier porte une poignée (13) de prise en main et un bouton d'extrémité (14) dont l'enfoncement permet de dégager le cliquet (11) à l'écart du secteur cranté (8a) par l'intermédiaire de la tige (12) à l'encontre d'un ressort de rappel (16).

8. Dispositif de commande selon l'une des revendications précédentes, **caractérisé en ce qu'**il comporte des moyens de contrôle électrique de position du levier 3 incluant un épaulement (17) de la biellette (8), qui permet de fermer ou d'ouvrir des contacts électriques disposés à l'intérieur d'un interrupteur (18).
